# EUROPÄISCHE PATENTSCHRIFT

(11) **EP 1 359 317 B1**
(45) Veröffentlichungstag und Bekanntmachung des Hinweises auf die Patenterteilung: **14.12.2005**
(21) Anmeldenummer: 03005775.6
(22) Anmeldetag: 14.03.2003
(51) Int. Cl.: F02M 55/00, F16B 7/06, F16B 5/02

(54) **Verbindungsvorrichtung mit einer Spannmutter mit Rechts- und Linksgewinde**
Connecting device with nut having right-hand and left-hand threading
Dispositif de connexion avec ecrou avec filet à droite et filet à gauche

(30) Priorität: 30.04.2002 DE 10219259
(43) Veröffentlichungstag der Anmeldung: 05.11.2003
(73) Patentinhaber: ROBERT BOSCH GMBH, 70442 Stuttgart (DE)
(72) Erfinder: Stadler, Werner, 71732 Tamm (DE); Eisenmenger, Matthias, 71642 Ludwigsburg (DE); Ochedowski, Richard, 70437 Stuttgart (DE)

(56) Entgegenhaltungen:
- EP-A- 0 194 501
- EP-A- 1 118 766
- US-A- 5 782 078
- US-A- 5 957 507

## Beschreibung

### Stand der Technik

Die Erfindung geht aus von einem Kraftstoffeinspritzventil nach der Gattung des Patentanspruchs 1.

In heutigen Dieseleinspritzsystemen werden zur Abdichtung der sehr hohen Drücke (bis zu 2500 bar) Planflächendichtungen verwendet. Dazu werden die abzudichtenden Flächen mit Spannmuttern, wie z.B. Bund- oder Überwurfmuttern, aneinander festgeschraubt. Da zur Gewährleistung der Dichtfunktion hohe Flächenpressungen an den Berührflächen verlangt werden, sind die verwendeten Spannmuttern meist bis an die Werkstoffgrenzen belastet. Eine zusätzliche Verstärkung der beteiligten Bauteile ist wegen dem Mangel an Bauraum oft nicht möglich. Um beim Verschrauben der Dichtflächen ein gegenseitiges Verdrehen der Dichtflächen zu verhindern, werden entweder Stifte als Verdrehsicherung bzw. Gegenhalter vorgesehen. Bei der Verwendung von Stiften müssen diese einen großen Teil des Anzugsdrehmomentes abfangen. Bei der Verwendung von Gegenhaltern sind geeignete Flächen am Bauteil anzubringen, was oft nur schwer bzw. gar nicht möglich ist.

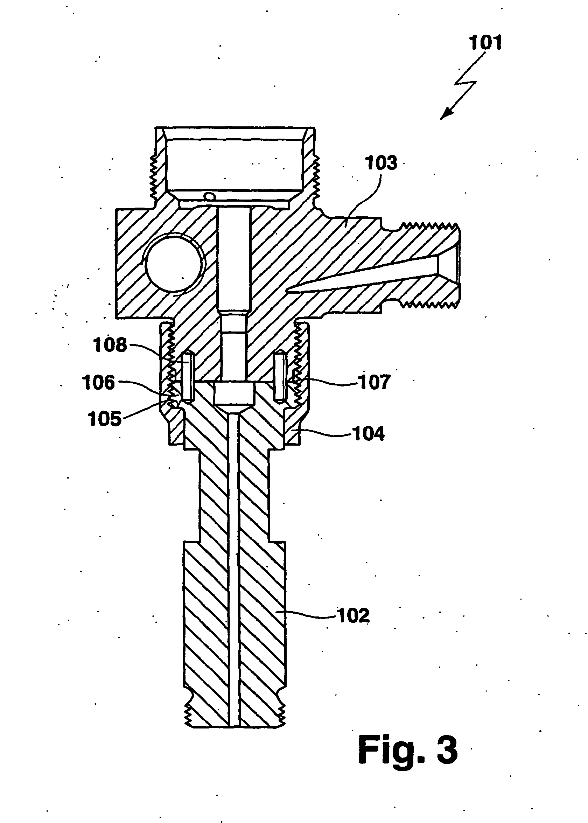

**Fig. 3** zeigt beispielhaft eine Spannvorrichtung **101** nach dem Stand der Technik, bei der zwei Teile **102, 103** mittels einer Spannmutter (Überwurfmutter) **104** miteinander verbunden sind. Dazu ist die mit einer Ringschulter **105** an einem Ringbund **106** des ersten Teils 102 anliegende Spannmutter 104 auf ein Außengewinde **107** des zweiten Teils 103 aufgeschraubt, bis die beiden Teile 102, 103 aneinander anliegen und aneinander festgeschraubt sind. Um beim Verschrauben ein gegenseitiges Verdrehen beider Teile 102, 103 zu verhindern, sind Positionierstifte **108** jeweils in beide Teile 102, 103 eingesteckt.

Bei der EP-A-0 194 501 ist ein Ventilunterteil auf einen Flüssigkeitsbehälter mittels einer Anschlussmutter befestigt, die zwei Innengewindeabschnitte mit entgegen gesetzter Gangrichtung aufweist und eine Rechts-Links-Verschraubung bildet.

Weiterhin ist aus der US-A-5 782 078 eine Spannmutter mit unterschiedlichen, gleich gerichteten Gewindesteigungen an beiden Enden bekannt.

Die EP-A-1 118 766 offenbart einen Kraftstoffinjektor, der über eine Überwurfmutter mit Innengewinde an eine Hochdruckanschlussstelle geschraubt ist.

Schließlich ist es aus der US-A-5 957 507 bekannt, eine Rohrabzweigung über eine Überwurfmutter mit Außengewinde in das Innengewinde eines Flansche zu schrauben, der am Rohr vorgesehen ist.

### Vorteile der Erfindung

Bei der erfindungsgemäßen Verschraubung handelt es sich um eine Kombination aus Rechts- und Linksgewinde. Beim Verschrauben der beiden Teile wird als erstes die Spanmutter an einem der beiden Teile angeschnäbelt, dann werden beide Bauteile zusammengefügt, über die Positionierstifte positioniert und miteinander über die Spannmutter verschraubt. Die Teile bewegen sich gleichmäßig aufeinander zu, bis es zum Kontakt ihrer planen Anlage- bzw. Dichtflächen kommt. Beim Anziehen der Spannmutter auf das geforderte Drehmoment heben sich die Momente an den gleichgängigen Rechts- und Linksgewinden gegeneinander auf, und zwischen den planen Anlage- bzw. Dichtflächen wirkt nur eine Axialkraft, aber kein Moment, das mit Gegenhaltern bzw. von den Positionierstiften aufgenommen werden muss. Die Krafteinleitung ist an den beiden Teilen identisch, und die Spannmutter hat keinen Ringbund, der hohen Biegemomenten ausgesetzt ist. Die Krafteinleitung erfolgt über die Gewindeflanken und kann sich dort großflächig verteilen. Ein weiterer Vorteil besteht darin, dass kein Ringbund mit einer Anlagefläche erforderlich ist und die Spannmutter bei der Montage nicht über eines der beiden Teile aufgeschoben werden muss. Daher können die den Außengewinden jeweils abgewandten Enden beider Teile auch einen größeren Außendurchmesser als die jeweiligen Außengewinde haben. Die erfindungsgemäße Verbindungsvorrichtung erlaubt bei gegebenem Bauraum sehr hohe Flächenpressungen und damit ein sicheres Abdichten sowie eine verbesserte Ausnutzung der Werkstoffe.

Weitere Vorteile und vorteilhafte Ausgestaltungen des Gegenstands der Erfindung sind der Beschreibung, der Zeichnung und den Ansprüchen entnehmbar.

### Zeichnung

Ein Ausführungsbeispiel der erfindungsgemäßen Verbindungsvorrichtung mit einer Spannmutter mit Rechts- und Linksgewinde ist in der Zeichnung schematisch dargestellt und in der nachfolgenden Beschreibung näher erläutert. Es zeigen:
- Fig. 1: die erfindungsgemäße Verbindungsvorrichtung im endmontierten Zustand im Längsschnitt;
- Fig. 2: die Verbindungsvorrichtung der Fig. 1 in einem vormontierten Zustand im Längsschnitt;
- Fig. 3: eine Verbindungsvorrichtung nach dem Stand der Technik in einer Darstellung analog zu Fig. 1.

### Beschreibung des Ausführungsbeispiels

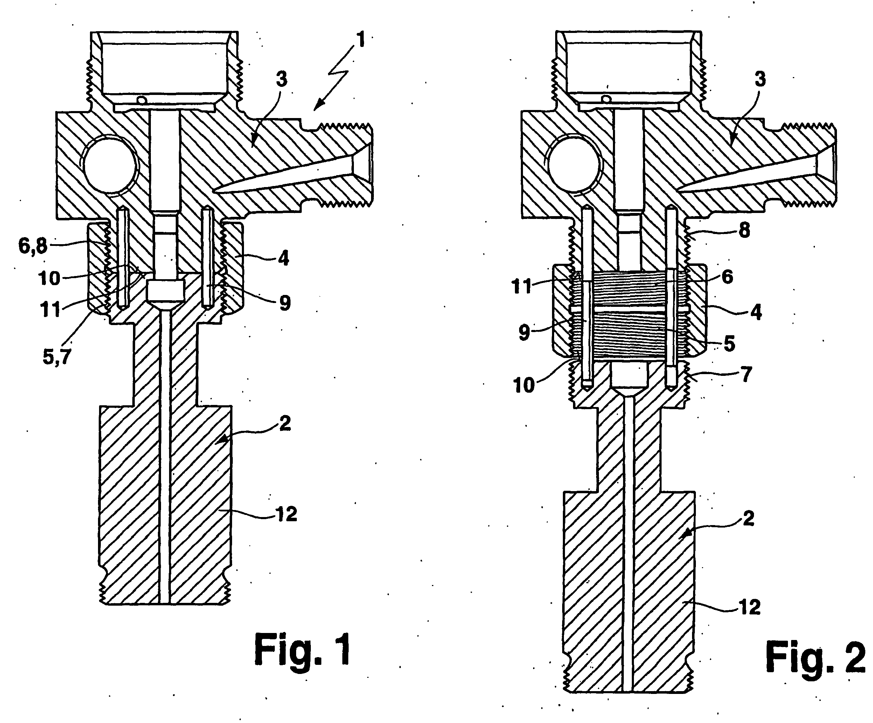

In der in **Fig. 1** gezeigten Verbindungsvorrichtung **1** sind zwei Teile **2, 3** mittels einer Spannmutter **4** mit Rechts- und Linksgewinde **5, 6** miteinander verschraubt. Dazu ist die Spannmutter **4** mit ihrem Rechtsgewinde 5 auf ein Rechtsgewinde **7** des ersten Teils 2 und mit ihrem Linksgewinde 6 auf ein Linksgewinde **8** des zweiten Teils 3 aufgeschraubt, wobei die Rechts- und Linksgewinde 5, 6 bzw. die Außengewinde 7, 8 gleichgängige Gewindesteigungen haben.

Zum Ausbilden der in Fig. 1 gezeigten Verbindungsvorrichtung 1 wird die Spannmutter 4 zunächst an eines der beiden Teile 2, 3, z.B., wie in **Fig. 2** gezeigt ist, an das zweite Teil 3, angeschnäbelt. Dann werden beide Teile 2, 3 zusammengefügt, über Positionierstifte **9** positioniert und über die Spannmutter 4 verschraubt. Die beiden Teile 2, 3 bewegen sich gleichmäßig aufeinander zu, bis die beiden Teile 2, 3 schließlich in der in Fig. 1 gezeigten Endlage mit planen Anlageflächen **10, 11** aneinander anliegen und durch die Spannmutter **4** gegeneinander verspannt sind. Die aneinander anliegenden Anlageflächen 10, 11 bilden eine hoch beanspruchbare Planflächendichtung. Beim Anziehen der Spannmutter 4 auf das geforderte Drehmoment heben sich die Momente am Rechts- und Linksgewinde gegeneinander auf, d.h., zwischen den Anlageflächen 10, 11 wirkt nur eine Axialkraft, aber kein Moment, das von den Positionierstiften 9 aufgenommen werden müsste. Die Krafteinleitung an den beiden Teilen 2, 3 ist identisch und erfolgt großflächig über die Gewindeflanken. Das dem Außengewinde 5 abgewandte Ende **12** des ersten Teils 2 hat einen Außendurchmesser, der größer als der Außendurchmesser seines Außengewinde 7 ist.

Im gezeigten Ausführungsbeispiel ist das erste Teil 2 ein Injektorkörper und das zweite Teil 3 ein Ventilkörper eines Kraftstoffeinspritzventils, die beide jeweils eine zentrale Längsbohrung **13, 14** haben. Im endmontierten Zustand bilden diese Längsbohrungen **13, 14** zusammen eine durch die Anlageflächen 10, 11 abgedichtete Hochdruckleitung des Kraftstoffeinspritzventils.

## Patentansprüche

1. Kraftstoffeinspritzventil (1) mit einem Injektorkörper (2), einem Ventilkörper (3) und einer Spannmutter (4), welche an einem der beiden Körper (2, 3) angeordnet und auf ein Außengewinde (8) des anderen der beiden Körper (2, 3) aufgeschraubt ist,
**dadurch gekennzeichnet,**
**dass** die Spannmutter (4) einenends ein Rechtsgewinde (5) zum Aufschrauben auf ein Außengewinde (7) des einen Körpers (2) und anderenends ein Linksgewinde (6) zum Aufschrauben auf das Außengewinde (8) des anderen Körpers (3) aufweist, wobei die beiden Körper (2, 3) über Positionierstifte (9) drehfest miteinander verbunden sind.

2. Kraftstoffeinspritzventil nach Anspruch 1, **dadurch gekennzeichnet, dass** das Rechts- und das Linksgewinde (5, 6) der Spannmutter (4) jeweils gleiche Steigung haben.

3. Kraftstoffeinspritzventil nach Anspruch 1 oder 2, **dadurch gekennzeichnet, dass** die beiden miteinander verschraubten Körper (2, 3) mit Anlageflächen (10, 11) aneinander anliegen.

4. Kraftstoffeinspritzventil nach einem der vorhergehenden Ansprüche, **dadurch gekennzeichnet, dass** das dem Außengewinde (7) abgewandte Ende (12) des einen Körpers (2) einen größeren Außendurchmesser als das Außengewinde (7) aufweist.

## Claims

1. Fuel injection valve (1) with an injector body (2), a valve body (3) and a clamping nut (4) which is arranged on one of the two bodies (2, 3) and is screwed onto an external thread (8) of the other of the two bodies (2, 3), **characterized in that** the clamping nut (4) has, at one end, a right-hand thread (5) for screwing onto an external thread (7) of the one body (2) and, at the other end, a left-hand thread (6) for screwing onto the external thread (8) of the other body (3), the two bodies (2, 3) being connected to each other in a rotationally fixed manner via positioning pins (9).

2. Fuel injection valve according to Claim 1, **characterized in that** the right-hand thread and the left-hand thread (5, 6) of the clamping nut (4) each have the same pitch.

3. Fuel injection valve according to Claim 1 or 2, **characterized in that** the two bodies (2, 3) which are screwed to each other bear against each other by means of bearing surfaces (10, 11).

4. Fuel injection valve according to one of the preceding claims, **characterized in that that** end (12) of the one body (2) which faces away from the external thread (7) has a larger outside diameter than the external thread (7).

## Revendications

1. Injecteur de carburant (1) comportant un corps d'injection (2), un corps de soupape (3) et un écrou de serrage (4) placé sur un des deux corps (2, 3) et vissé sur un filet extérieur (8) de l'autre des deux corps (2, 3),
**caractérisé en ce que**
l'écrou de serrage (4) comporte à une extrémité un filet à droite (5) pour permettre le vissage à un filet extérieur (7) du corps (2) et à l'autre extrémité un filet à gauche (6) pour permettre le vissage au filet extérieur (8) de l'autre corps (3), les deux corps (2, 3) étant solidaires en rotation l'un à l'autre par des broches de positionnement (9).

2. Injecteur de carburant selon la revendication 1,
**caractérisé en ce que**
les filets à droite et à gauche (5, 6) de l'écrou de serrage (4) ont chacun le même pas.

3. Injecteur de carburant selon la revendication 1 ou 2,
**caractérisé en ce que**
les deux corps (2, 3) vissés l'un à l'autre s'appliquent l'un contre l'autre par des surfaces de contact (10, 11).

4. Injecteur de carburant selon l'une des revendications précédentes,
**caractérisé en ce que**
l'extrémité (12) - détournée du filet extérieur (7) - de l'un des corps (2) a un diamètre extérieur plus important que le filet extérieur (7).
